# EUROPÄISCHE PATENTANMELDUNG

(11) **EP 4 718 673 A1**
(43) Veröffentlichungstag der Anmeldung: **01.04.2026**
(21) Anmeldenummer: 25201827.0
(22) Anmeldetag: 12.09.2025
(51) Int. Cl.: H02J 7/40, H01M 10/42, H01M 50/247, H02J 7/80

(54) **AKKUMULATOR**

(30) Priorität: 27.09.2024 DE 102024128086
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE)
(74) Vertreter: Canzler & Bergmeier Patentanwälte Partnerschaft mbB

(57) **Zusammenfassung**

Die Erfindung betrifft einen Akkumulator (1, 2), vorzugsweise Arbeitsgeräteakkumulator, Gartengeräteakkumulator und/oder Werkzeuggeräteakkumulator, insbesondere IoT-Arbeitsgeräteakkumulator,IoT-Gartengeräteakkumulator und/oder loT-Werkzeuggeräteakkumulator, mit zumindest einer Energiespeichereinheit (10) und mit zumindest einer Steuereinheit (5, 6) zum Steuern und/oder Überwachen des Akkumulators (1, 2) und/oder eines mit dem Akkumulator (1, 2) gekoppelten Endgeräts (3, 4). Ferner umfasst der Akkumulator (1, 2) zumindest eine, insbesondere bidirektionale, Akkudatenschnittstelle (7, 8) und die Steuereinheit (5, 6) derart ausgebildet und/oder eingerichtet ist, dass diese über die Akkudatenschnittstelle (7, 8) mit zumindest einer weiteren Steuereinheit (5, 6) zumindest eines weiteren Akkumulators (1, 2), insbesondere bidirektional, kommunizieren kann.

## Beschreibung

Die vorliegende Erfindung betrifft einen Akkumulator, vorzugsweise Arbeitsgeräteakkumulator, Gartengeräteakkumulator und/oder Werkzeuggeräteackumulator, insbesondere IoT-Arbeitsgeräteakkumulator, IoT-Gartengeräteackumulator und/oder IoT-Werkzeuggeräteakkumulator, mit zumindest einer Energiespeichereinheit und mit zumindest einer Steuereinheit zum Steuern und/oder Überwachen des Akkumulators und/oder eines mit dem Akkumulator gekoppelten Endgeräts.

Gattungsgemäße Akkumulatoren sind seit langem bekannt. Sie dienen beispielsweise der Energieversorgung von Elektrowerkzeugen oder Endgeräten im Allgemeinen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Ackumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Aufgabe der vorliegenden Erfindung ist es, technisch verbesserte Akkumulatoren bereitzustellen, die flexibel und/oder umfangreich einsetzbar und/oder mit denen Arbeiten erleichtert werden.

Die Aufgabe wird gelöst durch einen Akkumulator, ein System und/oder ein Verfahren mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Akkumulator, vorzugsweise ein Arbeitsgeräteakkumulator, Gartengeräteakkumulator und/oder Werkzeuggeräteakkumulator, insbesondere ein IoT-Arbeitsgeräteakkumulator, IoT-Gartengeräteakkumulator und/oder IoT-Werkzeuggeräteakkumulator. Der Akkumulator kann im Folgenden auch abgekürzt als Akku bezeichnet werden. Der Akkumulator kann ferner ein oder mehrere Merkmale aufweisen, um zumindest einen in der folgenden Beschreibung beschriebenen Verfahrensschritt durchzuführen.

Der Akkumulator weist zumindest eine Energiespeichereinheit auf, mittels der elektrische Energie gespeichert und bereitgestellt werden kann. Mittels der bereitgestellten elektrischen Energie kann ein Endgerät, beispielsweise ein Arbeitsgerät, ein Gartengerät und/oder ein Werkzeuggerät, betrieben werden.

Der Akkumulator umfasst weiterhin zumindest eine Steuereinheit zum Steuern und/oder Überwachen des Akkumulators und/oder eines mit dem Akkumulator gekoppelten Endgeräts. Die Steuereinheit sorgt für eine präzise Steuerung und/oder Überwachung des Akkumulators, wodurch eine optimale Nutzung der gespeicherten Energie gewährleistet wird.

Des Weiteren umfasst der Akkumulator zumindest eine, insbesondere bidirektionale, Akkudatenschnittstelle. Eine bidirektionale Akkudatenschnittstelle ermöglicht den wechselseitigen Austausch von Daten, was die Flexibilität bei der Verbindung mit anderen Geräten erhöht. Mit Hilfe der bidirektionalen Ackudatenschnittstelle können Daten empfangen und gesendet werden, so dass eine bidirektionale Kommunikation ausgebildet werden kann.

Ferner ist die Steuereinheit derart ausgebildet und eingerichtet, dass sie über die Akkudatenschnittstelle mit zumindest einer weiteren Steuereinheit eines weiteren Akkumulators, insbesondere bidirektional, kommunizieren kann. Die Möglichkeit der Kommunikation zwischen zumindest zwei bzw. mehreren Akkumulatoren kann beispielsweise zu einer koordinierten Energienutzung, zu einem koordinierten und aufeinander abgestimmten Betriebsverhalten der angekoppelten Endgeräte und/oder Lastverteilung führen. Durch die bidirektionale Kommunikation zwischen den zwei oder mehreren Akkumulatoren kann deren Betrieb und/oder der Betrieb der mit den Akkumulatoren gekoppelten Endgeräten aufeinander abgestimmt werden. Dies ermöglicht es, den Ladezustand und/oder die Betriebsparameter mehrerer Akkumulatoren und/oder damit gekoppelter Endgeräte zu steuern, indem dazugehörige Daten zwischen den Akkumulatoren ausgetauscht werden. Das Arbeiten mit mehreren Akkus kann dadurch beispielsweise besser koordiniert werden, da die Akkus Daten über sich selbst und/oder Daten über die angekoppelten Endgeräte und/oder Daten zum Steuern der Akkus und/oder der angekoppelten Endgeräte austauschen können.

Es ist vorteilhaft, wenn die Steuereinheit derart ausgebildet ist, dass sie eine, insbesondere bidirektionale, Kommunikationsverbindung zur zumindest einen weiteren Steuereinheit eines weiteren Akkumulators ausbilden kann. Durch die bidirektionale Kommunikationsverbindung können Informationen und Daten in beide Richtungen ausgetauscht werden, was eine schnelle und präzise Reaktion auf Änderungen beim System der beiden Akkus und der damit gekoppelten Endgeräte ermöglicht.

Vorteilhafterweise ist die Steuereinheit derart ausgebildet, dass sie nach einem weiteren Akkumulator suchen kann. Zusätzlich oder alternativ kann der zumindest eine Akku auch ein Beacon-Signal zum Auffinden durch einen weiteren Akkumulator aussenden. Der entsprechende weitere Akku kann das Beacon-Signal erfassen und erkennen. Vorteilhaft ist es, wenn dieser dann ein Antwortsignal an den das Beacon-Signal aussendenden Akku übermitteln kann. Dadurch können sich die zumindest zwei Akkus auffinden und die bidirektionale Kommunikation ausbilden. Das Aussenden eines Beacon-Signals erleichtert die Auffindung und/oder Vernetzung zusätzlicher Akkumulatoren, was die Erweiterbarkeit des Systems aus mehreren Akkus verbessert. Dies führt zu einer höheren Effizienz bei der Suche und/oder dem Verbinden von Akkumulatoren.

Gemäß einer vorteilhaften Weiterbildung der Erfindung kann die Steuereinheit mit der zumindest einen weiteren Steuereinheit eines weiteren Akkumulators eine Entscheidung darüber treffen, welche der zumindest zwei Steuereinheiten einen Master und welche einen Slave bildet. Die Aufteilung der Steuereinheiten in Master und Slave sorgt für eine Hierarchie zwischen den Akkumulatoren. Infolgedessen kann eine erste Steuereinheit, die auch als Master-Steuereinheit bezeichnet werden kann, die zumindest eine weitere bzw. zumindest eine zweite Steuereinheit, die auch als Slave-Steuereinheit bezeichnet werden kann, steuern und/oder überwachen. Im Folgenden kann der Zusatz "Master" und "Slave" für die Steuereinheit, das Endgerät und/oder den Akku verwendet werden. Dabei ist es klar, dass die Master-Steuereinheit, das Master-Endgerät und/oder der Master-Akkumulator bzw. der Master-Akku im Zusammenhang mit dem Master-Slave-Prinzip in einer Hierarchie über der Slave-Steuereinheit, dem Slave-Endgerät und/oder dem Slave-Akkumulator bzw. dem Slave-Akku steht.

Vorteilhafterweise kann die Steuereinheit in Abhängigkeit der getroffenen Entscheidung als Master oder Slave betrieben werden. Der Betrieb der Steuereinheit als Master oder Slave ermöglicht eine flexible Anpassung an verschiedene Betriebsmodi und sorgt für eine optimale Steuerung des Gesamtsystems. Dies führt zu einer effizienteren Nutzung der Ressourcen und verbessert die Koordination zwischen den verschiedenen Akkumulatoren.

Beispielsweise kann ein erster Akku mit einer Bohrmaschine gekoppelt sein und diese betreiben. Des Weiteren kann beispielsweise ein zweiter Akku mit einem Staubsauger bzw. einem Akkustaubsauger gekoppelt sein und diesen betreiben. Der Master-Akku bzw. die Master-Steuereinheit steuert die Bohrmaschine und der Slave-Akku bzw. die Slave-Steuereinheit steuert den Staubsauger. Durch die bidirektionale Kommunikation über die Akkudatenschnittstelle können beide Akkus bzw. beide Steuereinheiten miteinander kommunizieren. Sobald die Bohrmaschine startet, kann die Master-Steuereinheit der Slave-Steuereinheit mitteilen, dass diese den Staubsauger aktivieren soll, um den beim Bohren entstehenden Schmutz sofort aufzusaugen. Dies sorgt für eine automatische und/oder effiziente Arbeitsweise ohne manuelle Eingriffe, zumindest des Staubsaugers. Zusätzlich oder alternativ ermöglicht die Steuerung durch den Master-Akku, den Slave-Akku und/oder den Staubsauger automatisch auszuschalten, wenn die Bohrmaschine nicht in Betrieb ist, was die Energieeffizienz erhöht und/oder unnötigen Energieverbrauch vermeidet.

Ferner ist es von Vorteil, wenn der Akkumulator zumindest eine Erkennungseinheit umfasst, mittels der die Art des an den Akkumulator angekoppelten Endgeräts, der Akkumulatorstatus und/oder der Endgerätestatus erkannt werden kann. Die Erkennungseinheit ermöglicht eine automatische Anpassung der Steuerungsparameter des Akkumulators an das jeweilige Endgerät, was zu einer verbesserten Effizienz und Kompatibilität führt. Zudem kann der Zustand des Akkumulators und/oder des Endgeräts kontinuierlich überwacht werden. Beispielsweise kann somit erkannt werden, ob die Bohrmaschine oder der Staubsauger angekoppelt ist. In Abhängigkeit davon kann entschieden werden, welche Steuereinheit den Master und welche den Slave bildet. In diesem Fall bildet die Steuereinheit, die mit der Bohrmaschine gekoppelt ist, den Master. Die Steuereinheit, die mit dem Staubsauger gekoppelt ist, bildet den Slave.

Zusätzlich oder alternativ kann auch die Steuereinheit die Art des an den Ackumulator angekoppelten Endgeräts, den Akkumulatorstatus und/oder den Endgerätestatus des an den Akkumulator angekoppelten Endgeräts erkennen.

Vorteilhaft ist es, wenn die Steuereinheit des Master-Akkus kontinuierlich die Leistungsanforderungen des angeschlossenen Endgeräts (z. B. Bohrmaschine) überwacht und darauf basierend die Leistungsabgabe des Slave-Akkus (z. B. der Akku des Staubsaugers) dynamisch anpasst. Wenn die Bohrmaschine auf hoher Leistung läuft, kann der Slave-Akku automatisch den Staubsauger mit mehr Energie versorgen, um eine synchronisierte Leistung beider Geräte zu gewährleisten.

Es ist vorteilhaft, wenn die Steuereinheit in Abhängigkeit von der Art des an den Akkumulator angekoppelten Endgeräts, des Akkumulatorstatus und/oder des Endgerätestatus mit der zumindest einen weiteren Steuereinheit die Entscheidung über den Master und den Slave treffen kann. Die dynamische Anpassung der Master-Slave-Rollen, basierend auf den erkannten Parametern, sorgt für eine optimale Ressourcennutzung und verbessert die Energieverteilung im System. Dies führt zu einer flexibleren und effizienteren Betriebsweise des Systems, insbesondere in komplexen Anwendungen. Beispielsweise kann die Steuereinheit den Master bilden, die mit der Bohrmaschine gekoppelt ist. Die Steuereinheit, die mit dem Staubsauger gekoppelt ist, bildet den Slave. Zusätzlich oder alternativ können auch anhand des Akkumulatorstatus die Master-Slave-Rollen vergeben werden. Beispielsweise ist es sinnvoll, die Steuereinheit zur Master-Steuereinheit zu ernennen, die den höheren Ladezustand aufweist. Ein Ausfall des Slaves ist besser als ein Ausfall des Masters. Zusätzlich oder alternativ können auch anhand des Endgerätestatus die Master-Slave-Rollen vergeben werden.

Darüber hinaus ist es vorteilhaft, wenn, nach der Entscheidung über den Master und den Slave, die Master-Steuereinheit Betriebsbefehle und/oder Steuerbefehle an die Slave-Steuereinheit übermitteln kann, mit denen die Slave-Steuereinheit ihren entsprechenden Akkumulator und/oder das an ihren Akkumulator angekoppelte Endgerät steuern und/oder überwachen kann. Die Übermittlung von Betriebsbefehlen ermöglicht eine zentrale Steuerung durch die Master-Einheit, d. h. den Master-Akku bzw. die Master-Steuereinheit. Die Master-Einheit, d. h. der Master-Akku bzw. die Master-Steuereinheit, verteilt somit die Betriebsbefehle und/oder Steuerbefehle zum Steuern der Slave-Einheiten, d. h. den Slave -Akku bzw. die Slave -Steuereinheit, die wiederum die entsprechenden Endgeräte steuern.

Als Ergänzung oder Alternative ist es von Vorteil, wenn die Slave-Steuereinheit Statusinformationen über ihren Akkumulator und/oder über das an ihren Akkumulator angekoppelte Endgerät an die Master-Steuereinheit übermitteln kann. Die Übermittlung von Statusinformationen ermöglicht es der Master-Steuereinheit, die Gesamtleistung des Systems in Echtzeit zu überwachen und/oder entsprechende Anpassungen vorzunehmen. Dies führt zu einer Verbesserung der Systemstabilität und sorgt dafür, dass der Betrieb optimiert und Ausfälle minimiert werden. Beispielsweise kann der Slave-Akku den Master-Akku über den Zustand des Staubsaugers informieren. Falls es beispielsweise zu einer Überhitzung oder einem niedrigen Akkuladezustand kommt, kann der Master-Akku darauf reagieren und/oder den Betrieb des Staubsaugers entsprechend anpassen.

Es ist vorteilhaft, wenn die Steuereinheit mittels der Akkudatenschnittstelle eine Identifizierung aussenden kann, um einen weiteren Akkumulator zu identifizieren. Die Identifizierung eines weiteren Akkumulators erleichtert die Integration neuer Akkus in das bestehende System und erhöht die Flexibilität.

Darüber hinaus ist es vorteilhaft, wenn mittels der Akkudatenschnittstelle eine Identifizierung eines weiteren Akkumulators empfangen und von der Steuereinheit ausgewertet werden kann, um den weiteren Akkumulator zu identifizieren. Die Fähigkeit, eine Identifizierung zu empfangen und auszuwerten, ermöglicht eine effiziente Erkennung und Integration von zusätzlichen Akkumulatoren. Dies verbessert die Skalierbarkeit des Systems und ermöglicht eine flexible Anpassung an verschiedene Anforderungen.

Von Vorteil ist es, wenn die Steuereinheit mittels der Akkudatenschnittstelle Betriebsprogrammdaten an den weiteren Akkumulator senden und/oder von ihm empfangen kann. Der Austausch von Betriebsprogrammdaten gewährleistet, dass alle Akkumulatoren die neuesten Updates erhalten, was die Systemleistung und Sicherheit erhöht. Dies ermöglicht eine kontinuierliche Verbesserung und Anpassung der Software, ohne dass manuelle Eingriffe erforderlich sind. Die Betriebsprogrammdaten können beispielsweise eine Firmware sein oder diese beinhalten.

Es ist vorteilhaft, wenn die Akkudatenschnittstelle eine Fernfunkschnittstelle umfasst, die vorzugsweise als Sigfox, LoRaWAN, 5G, 4G, 3G, 2G, LTE-CAT M, Satellitenkommunikation, WiMAX, LTE-M, DASH7, Wi-Fi, HAPS Mobilfunkstandard, NB-IoT und/oder als eine Satellitenverbindung ausgebildet ist. Die Fernfunkschnittstelle ermöglicht eine weiträumige Kommunikation und bietet eine hohe Flexibilität für Anwendungen, die eine große Reichweite erfordern.

Darüber hinaus ist es vorteilhaft, wenn die Akkudatenschnittstelle eine Nahfunkschnittstelle umfasst, die vorzugsweise als Bluetooth, Wi-Fi, Zigbee, NFC, Z-Wave, Infrarot, Thread, Ultra-Wideband, Bluetooth Low Energy, ANT+, Wi-Fi Direct und/oder RFID ausgebildet ist. Die Nahfunkschnittstelle ermöglicht eine energieeffiziente und schnelle Kommunikation über kurze Distanzen, was insbesondere bei tragbaren Geräten von Vorteil ist.

Vorgeschlagen wird weiterhin ein System, das zumindest zwei Akkumulatoren umfasst, die vorzugsweise zumindest ein Merkmal der vorangegangenen und/oder nachfolgenden Beschreibung aufweisen, wobei die genannten Merkmale einzeln oder in beliebiger Kombination vorhanden sein können. Der zumindest eine Akkumulator oder die zumindest zwei Akkumulatoren können ferner derart ausgebildet und/oder eingerichtet sein, dass diese gemäß zumindest einem Verfahrensschritt der vorangegangenen und/oder nachfolgenden Beschreibung betrieben werden können. Das System ermöglicht ein kollektives und/oder aufeinander abgestimmtes Betreiben, Steuern und/oder Überwachen von zumindest zwei Akkumulatoren und/oder von daran angekoppelten Endgeräten. Dabei kann das System auch mehrere Ackumulatoren und/oder mehrere daran angekoppelte Endgeräte umfassen. Die zumindest zwei oder die mehreren Akkumulatoren können im System miteinander über deren bidirektionale Akkumulatoren kommunizieren. Die zumindest zwei oder die mehreren Akkumulatoren können im System über die Master-Slave-Rollen entscheiden und entsprechend vergeben, so dass ein Master-Akku bzw. die entsprechende Master-Steuereinheit die anderen Ackumulatoren, d. h. die Slave-Akkumulatoren, und/oder die daran angekoppelten Endgeräte steuert. Der Master-Akku bzw. die entsprechende Master-Steuereinheit kann im System auch Steuerbefehle und/oder die Betriebsbefehle verteilen, die die anderen Akkumulatoren, d. h. die Slave-Akkumulatoren, ausführen.

Vorgeschlagen wird weiterhin ein Verfahren zum Betreiben eines Systems mit zumindest zwei Akkumulatoren, wobei das System und/oder die Akkumulatoren vorzugsweise gemäß einem oder mehreren Merkmalen der vorangegangenen und/oder nachfolgenden Beschreibung ausgebildet sind, wobei die genannten Merkmale einzeln oder in beliebiger Kombination vorhanden sein können. Des Weiteren kann auch zumindest ein Verfahrensschritt ausgeführt werden, der im Zusammenhang mit einem körperlichen Merkmal beschrieben ist. Ferner kann das Verfahren ein oder mehrere Verfahrensschritte der vorangegangenen und/oder nachfolgenden Beschreibung umfassen.

Beim Verfahren kommuniziert eine erste Steuereinheit eines ersten Akkumulators über dessen Akkudatenschnittstelle mit zumindest einer zweiten Steuereinheit eines zweiten Akkumulators, insbesondere bidirektional. Das Verfahren ermöglicht eine effiziente Kommunikation zwischen den Akkumulatoren, was die Koordination und Synchronisation des Systems verbessert. Durch die bidirektionale Kommunikation wird eine flexible und dynamische Steuerung der Akkumulatoren ermöglicht, was die Effizienz erhöht. Es können hierbei auch mehrere Akkumulatoren bzw. die mehreren Steuereinheiten miteinander kommunizieren.

Es ist vorteilhaft, wenn die beiden Steuereinheiten entscheiden, welche der zumindest zwei Steuereinheiten den Master und welche den Slave bildet. Die Entscheidung über die Master-Slave-Rollen ermöglicht eine zentrale Steuerung, die den Betrieb vereinfacht und die Effizienz steigert. Dies führt zu einer verbesserten Koordination der Arbeitsabläufe mit den Akkus und/oder mit den daran angekoppelten Endgeräten.

Es ist vorteilhaft, wenn die Akkumulatoren nach einem anderen Akkumulator suchen und/oder ein Beacon-Signal aussenden können. Dies erleichtert die automatische Vernetzung und/oder Integration weiterer Akkumulatoren, was die Skalierbarkeit und Flexibilität des Systems erhöht. Zudem wird der Zeitaufwand für die Konfiguration und Integration neuer Komponenten reduziert.

Vorteilhafterweise entscheiden die zumindest zwei Steuereinheiten in Abhängigkeit der Art der an die Akkumulatoren angekoppelten Endgeräte, des Ackumulatorstatus und/oder des Endgerätestatus darüber, welche Steuereinheit den Master und welche den zumindest einen Slave bildet. Dadurch kann die Hierarchie ausgebildet werden. Die Art der an die Akkumulatoren angekoppelten Endgeräte, den Akkumulatorstatus und/oder den Endgerätestatus können hierbei Erkennungseinheiten der Akkumulatoren und/oder die entsprechenden Steuereinheiten ermitteln.

Darüber hinaus ist es vorteilhaft, wenn nach der Entscheidung die Master-Steuereinheit Betriebsbefehle an die Slave-Steuereinheit übermittelt, mit denen die Slave-Steuereinheit ihren entsprechenden Akkumulator und/oder das an ihren Akkumulator angekoppelte Endgerät steuern und/oder überwachen kann. Die Übermittlung von Betriebsbefehlen ermöglicht eine zentrale Steuerung, die den Betrieb vereinfacht und/oder die Gesamtleistung des Systems aus mehreren Akkus und/oder aus den mehreren Endgeräten verbessert. Zudem wird die Effizienz gesteigert, da die Slave-Steuereinheit gezielt auf Anweisungen der Master-Steuereinheit reagieren kann.

Es ist vorteilhaft, wenn die Slave-Steuereinheit Statusinformationen über ihren Akkumulator und/oder das an ihren Akkumulator angekoppelte Endgerät an die Master-Steuereinheit übermitteln kann. Die Übermittlung von Statusinformationen ermöglicht eine Echtzeitüberwachung des Slave-Akkus und/oder des Slave-Endgeräts und/oder sorgt für eine schnelle Reaktion auf Veränderungen im Betrieb. Dies führt zu einer höheren Systemzuverlässigkeit, eine höhere Arbeitsleistung und/oder verbessert die Anpassungsfähigkeit des Systems an unterschiedliche Betriebsbedingungen.

Vorteilhafterweise werden Betriebsprogrammdaten zum Aktualisieren einer Betriebssoftware von einem Akkumulator mittels der Akkudatenschnittstelle auf den anderen Akkumulator übertragen, wobei die Betriebsprogrammdaten vorzugsweise vorher vom entsprechenden Akkumulator angefordert werden. Dies ermöglicht eine kontinuierliche Aktualisierung der Software, was die Leistungsfähigkeit und Sicherheit des Systems verbessert. Zudem wird der Wartungsaufwand reduziert, da Updates automatisch über das System, d. h. die miteinander gekoppelten Akkus, verteilt werden können.

Darüber hinaus ist es vorteilhaft, wenn sich die beiden Akkumulatoren, insbesondere vor der Entscheidung über den Master und den Slave, über eine Identifizierung, die vorzugsweise übermittelt wird, identifizieren. Die Identifizierung der Akkumulatoren vor der Konfiguration sorgt für eine sichere und effiziente Kommunikation zwischen den Komponenten. Dies erhöht die Zuverlässigkeit und die Genauigkeit der Master-Slave-Entscheidung und verbessert die Systemleistung.

Die Verteilung der Master-Slave-Rolle der zumindest zwei Akkumulatoren wird durch das folgende Beispiel erläutert.

Beispielsweise ist ein erster Akku mit einer Bohrmaschine und ein zweiter Akku mit einem Staubsauger gekoppelt, mit dem der beim Bohren entstehende Staub aufgesaugt werden soll. Die beiden Steuereinheiten können zuerst entscheiden, welche der Master und welche der Slave ist. **In** diesem Ausführungsbeispiel hängt der Betrieb des Staubsaugers vom Betrieb der Bohrmaschine ab. Es ist somit von Vorteil, wenn der Akku, der mit der Bohrmaschine gekoppelt ist, der Master ist. Der Akku, der mit dem Staubsauger gekoppelt ist, bildet den Slave. Wenn die Bohrmaschine startet, wird auch der Staubsauger automatisch synchron und/oder auf Befehl der Master-Steuereinheit eingeschaltet und solange betrieben, wie die Bohrmaschine in Betrieb ist. Nach Beendigung des Bohrvorgangs kann der Staubsauger mit einer kurzen Verzögerung ausgeschaltet werden, um verbleibenden Schmutz aufzufangen.

Ferner ist es von Vorteil, wenn die Master-Steuereinheit kontinuierlich den Status des Slave-Akkus und/oder des daran angekoppelten Endgeräts überwacht. Bei Fehlern wie Überhitzung, niedrigem Akkustand und/oder einem Ausfall des Slave-Systems kann der Master-Akku automatisch Gegenmaßnahmen einleiten, wie etwa die Drosselung der Leistung oder eine Umschaltung auf einen alternativen Betriebsmodus.

Außerdem ist es von Vorteil, wenn vor der Nutzung des Systems spezifische Profile für die angeschlossenen Endgeräte (beispielsweise Bohrmaschine und/oder Staubsauger) gespeichert werden. Die Master-Steuereinheit greift auf diese Profile zu, um automatisch die optimalen Betriebsparameter festzulegen.

Weitere Vorteile der Erfindung sind in den nachfolgenden Ausführungsbeispielen beschrieben. Es zeigen:
- **Figur 1**: eine schematische Ansicht mit zwei Akkumulatoren, die miteinander kommunizieren und die jeweils mit Endgeräten gekoppelt sind,
- **Figur 2**: eine schematische perspektivische Ansicht eines Akkumulators,
- **Figur 3**: eine schematische Ansicht mit zwei Akkumulatoren, die miteinander kommunizieren, die jeweils mit Endgeräten gekoppelt sind und die jeweils eine Erkennungseinheit aufweisen und
- **Figur 4**: eine schematische Ansicht des Akkumulators mit einer Fernfunkschnittstelle und einer Nahfunkschnittstelle.

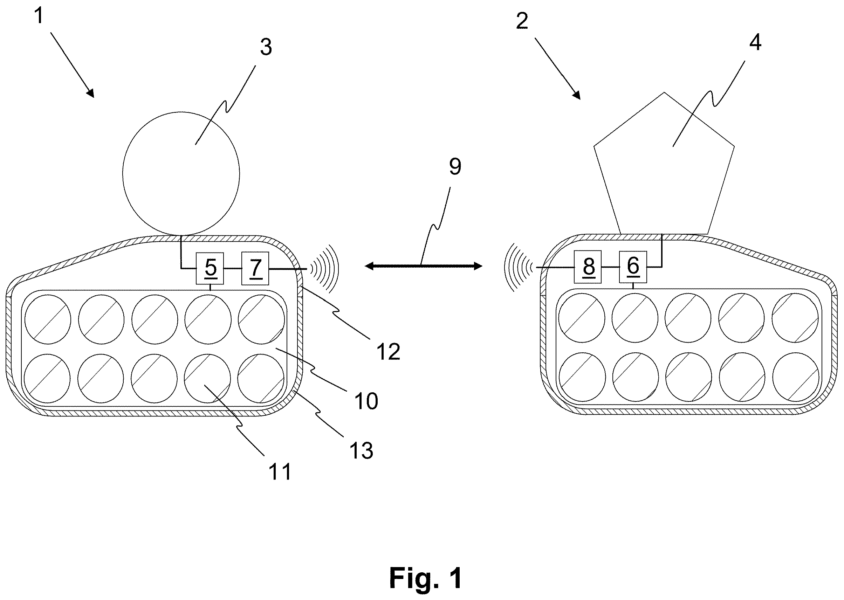

Das in Figur 1 dargestellte Ausführungsbeispiel zeigt ein System 28, das zwei miteinander kommunizierende Akkumulatoren 1, 2 umfasst, die jeweils mit einem Endgerät 3, 4 verbunden sind. Der erste Akkumulator 1 ist mit einem ersten Endgerät 3, beispielsweise einer Bohrmaschine, und der zweite Akkumulator 2 mit einem zweiten Endgerät 4, wie etwa einem Staubsauger, gekoppelt. Dieses System 28 und das Verfahren zum Betreiben, Steuern, Kommunizieren und/oder zur Rollenvergabe in Bezug auf Master und Slave ermöglicht eine koordinierte und/oder automatisierte Steuerung der zumindest zwei Akkumulatoren 1, 2 und/oder der zumindest zwei Endgeräte 3, 4.

Der Akkumulator 1, 2 kann im Weiteren auch abgekürzt als Akku 1, 2 bezeichnet werden.

Das erste Endgerät 3 ist hier schematisch als Kreis dargestellt. Das zweite Endgerät 4 ist hier schematisch als Fünfeck dargestellt. Des Weiteren wird das System 28 und/oder das Verfahren anhand des Ausführungsbeispiels beschrieben, dass das erste Endgerät 3 eine Bohrmaschine und das zweite Endgerät 4 ein Staubsauger ist, der den Staub beim Bohren aufsaugen soll.

Des Weiteren werden im Folgenden für ein Ausführungsbeispiel die Begriffe "Master" und "Slave" verwendet, die aus der Informationstechnik und/oder Steuerungstechnik bekannt sind. Diese beiden Begriffe werden weiterhin im Zusammenhang mit den Akkus 1, 2, den Endgeräten 3, 4 und/oder den Steuereinheiten 5, 6 verwendet. Im Folgenden werden die Begriffe so verwendet, dass der Master-Akku 1, das Master-Endgerät 3 und/oder die Master-Steuereinheit 5 hierarchisch über einem Slave-Akku 2, einem Slave-Endgerät 4 und/oder einer Slave-Steuereinheit 6 steht.

Wie aus der Figur 1 hervorgeht, umfasst der erste Akkumulator 1 eine erste Steuereinheit 5, die die Steuerung und/oder Überwachung des ersten Akkumulators 1 und/oder des an den ersten Akku 1 angekoppelten ersten Endgeräts 3 übernimmt. Der zweite Akkumulator 2 umfasst eine zweite Steuereinheit 6, die für die Steuerung und/oder Überwachung des zweiten Akkumulators 2 und/oder des daran angekoppelten zweiten Endgeräts 4 zuständig ist.

Des Weiteren umfassen die Akkus 1, 2 jeweils eine Akkudatenschnittstelle 7, 8. Der erste Akku 1 umfasst die erste Akkudatenschnittstelle 7 und der zweite Akku 2 umfasst die zweite Akkudatenschnittstelle 8.

Die beiden Steuereinheiten 5, 6 sind derart ausgebildet und/oder eingerichtet, dass sie über die jeweils zugeordneten Akkudatenschnittstellen 7, 8 eine bidirektionale Kommunikationsverbindung 9 aufbauen können. Dadurch können die zumindest zwei Akkus 1, 2 miteinander bidirektional kommunizieren. Durch die bidirektionale Kommunikation zwischen den zwei oder mehreren Akkumulatoren 1, 2 kann deren Betrieb aufeinander abgestimmt werden. Diese Kommunikation ermöglicht beispielsweise eine Synchronisation der beiden Akkus 1, 2 und/oder der beiden Endgeräte 3, 4. Dadurch kann beispielsweise erreicht werden, dass das zweite Endgerät 4, beispielsweise der Staubsauger, automatisch aktiviert wird, sobald das erste Endgerät 3, beispielsweise die Bohrmaschine, in Betrieb genommen wird. Dadurch wird der Staubsauger gleichzeitig mit der Bohrmaschine aktiviert, so dass der beim Bohren entstehende Schmutz abgesaugt wird. Dies reduziert die Notwendigkeit für manuelle Eingriffe und sorgt für eine saubere und effiziente Arbeitsweise.

Des Weiteren sind die Steuereinheiten 5, 6 derart ausgebildet und/oder eingerichtet, dass sie eine Entscheidung darüber treffen können, welche der beiden Steuereinheiten 5, 6 als Master und welche als Slave fungiert. Dies kann beispielsweise durch einen Abgleich der Betriebszustände beider Akkumulatoren 1, 2 und/oder der daran angeschlossenen Endgeräte 3, 4 erfolgen. Sobald die Entscheidung getroffen wurde, übernimmt die Master-Steuereinheit 5 die Steuerung der Slave-Steuereinheit 6. In den hier gezeigten Ausführungsbeispielen der Figuren ist die erste Steuereinheit 5 die Master-Steuereinheit 5 und die zweite Steuereinheit 6 ist die Slave-Steuereinheit 6. Es kann zusätzlich oder alternativ davon gesprochen werden, dass der erste Akku 1 der Master-Akku 1 und der zweite Akku 2 der Slave-Akku 2 ist. Weiterhin kann zusätzlich oder alternativ davon gesprochen werden, dass das erste Endgerät 3 das Master-Endgerät 3 und das zweite Endgerät 4 das Slave-Endgerät 4 ist.

Des Weiteren können die zumindest zwei Steuereinheiten 5, 6 die Entscheidung über den Master und den Slave in Abhängigkeit einer Art des an die Akkus 1, 2 angekoppelten Endgeräte 3, 4 treffen. Beispielsweise ist es beim Ausführungsbeispiel mit der Bohrmaschine und dem Staubsauger so, dass es sinnvoll ist, wenn die Bohrmaschine bzw. die erste Steuereinheit 5, die mit der Bohrmaschine gekoppelt ist, die Master-Steuereinheit 5 bildet, da ein Betrieb des Staubsaugers vom Betrieb der Bohrmaschine abhängt. Die zweite Steuereinheit 6 bildet somit die Slave-Steuereinheit 6.

Zusätzlich oder alternativ können die zumindest zwei Steuereinheiten 5, 6 die Entscheidung über den Master und den Slave auch in Abhängigkeit eines Akkumulatorstatus der Akkus 1, 2 treffen. Beispielsweise kann für die Entscheidung über den Master und den Slave ein Ladezustand der beiden Ackus 1, 2 herangezogen werden. Beispielsweise kann die Steuereinheit 5, 6 den Master bilden, deren Akku 1, 2 den höheren Ladezustand aufweist.

Weiterhin zusätzlich oder alternativ können die zumindest zwei Steuereinheiten 5, 6 die Entscheidung über den Master und den Slave auch in Abhängigkeit eines Endgerätestatus der Endgeräte 3, 4 treffen.

Der Vorteil dieser Master-Slave-Konfiguration liegt in der automatischen Steuerung der Endgeräte 3, 4 durch die Master-Steuereinheit 5. Insbesondere kann die Leistung und/oder der Betrieb des zweiten Endgeräts 4 (z. B. des Staubsaugers) durch die Master-Steuereinheit 5 in Abhängigkeit von der Leistung und/oder des Betriebs des ersten Endgeräts 3 (z. B. der Bohrmaschine) angepasst werden. Wenn die Bohrmaschine beispielsweise mit hoher Leistung arbeitet, wird die Saugkraft des Staubsaugers entsprechend erhöht. Dies ermöglicht eine dynamische Anpassung der Leistungsstufen und/oder der Betriebsstufen der Endgeräte 3, 4 und führt zu einer verbesserten Effizienz bei der Nutzung der beiden Akkumulatoren 1, 2 und/oder der Endgeräte 3, 4.

Wie aus Figur 1 hervorgeht, erfolgt die bidirektionale Kommunikation zwischen den Akkumulatoren 1, 2 über eine hier schematisch mittels eines Pfeils dargestellten Kommunikationsverbindung 9. Diese Kommunikationsverbindung 9 ermöglicht es, dass ein Akku 1, 2 mit einem weiteren Akku 1, 2 die bidirektionale Kommunikation ausbilden kann. **In** dem hier gezeigten Ausführungsbeispiel kann die Master-Steuereinheit 5, den Betriebsstatus des Slave-Akkumulators 2 und/oder des daran angeschlossenen Endgeräts 4 überwachen und/oder Betriebsbefehle zum Steuern des Slave-Akkumulators 2 und/oder des daran angeschlossenen Endgeräts 4 an die Slave-Steuereinheit 6 senden. Die Slave-Steuereinheit 6 sorgt dann beispielsweise dafür, dass das zweite Endgerät 4 nur dann aktiviert wird, wenn das erste Endgerät 3 in Betrieb ist. Sobald das erste Endgerät 3 ausgeschaltet wird, sendet die Master-Steuereinheit 5 ein Signal an die Slave-Steuereinheit 6, um auch das zweite Endgerät 4 auszuschalten. Dies verhindert unnötigen Stromverbrauch und trägt zur Verlängerung der Betriebsdauer beider Akkumulatoren 1 und 2 bei.

Zusätzlich oder alternativ ist es vorteilhaft, dass die Steuereinheiten 5, 6 eine kontinuierliche Überwachung der verbundenen Akkumulatoren 1, 2 sowie der Endgeräte 3, 4 ermöglichen. Gemäß dem in Figur 1 dargestellten Ausführungsbeispiel können die Steuereinheiten 5, 6 über die Akkudatenschnittstellen 7, 8 nicht nur Betriebsbefehle austauschen, sondern auch Statusinformationen übermitteln. Dies bedeutet, dass der Master-Akkumulator 1 den Status des Slave-Akkumulators 2 sowie des daran angeschlossenen Endgeräts 4 überwachen kann. Die Slave-Steuereinheit 6 kann über die zweite Akkudatenschnittstelle 8 des zweiten Akkus 2 die Statusinformationen an die Master-Steuereinheit 5 übermitteln. Sollte es zu einem Problem kommen, wie etwa eine Überhitzung oder ein niedriger Ladezustand des Slave-Akkumulators 2, kann der Master-Akkumulator 1 entsprechende Maßnahmen ergreifen, beispielsweise die Leistung reduzieren und/oder eine Warnung ausgeben. Dies trägt zur Betriebssicherheit und zur Vermeidung von Schäden an den Endgeräten 3, 4 bei.

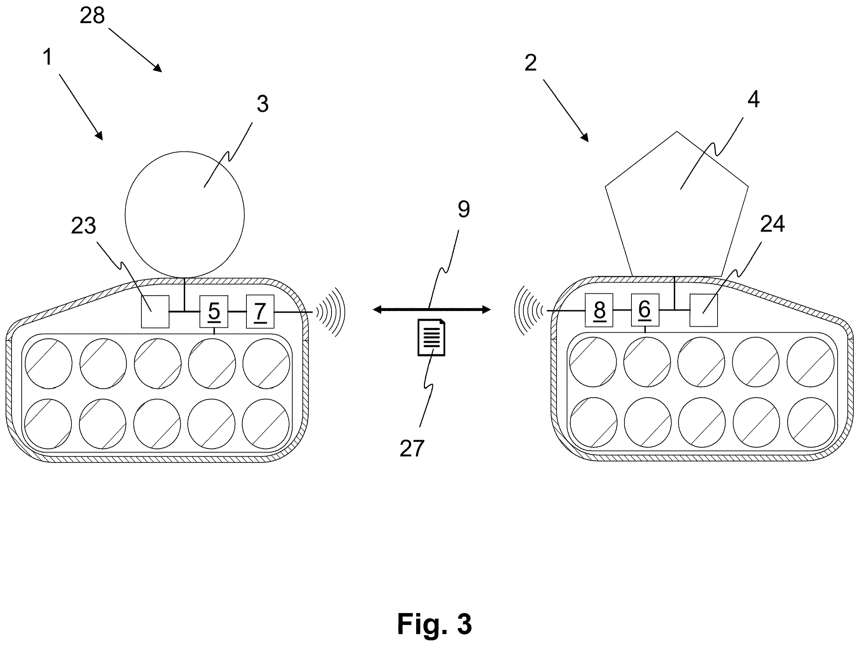

In einem weiteren Ausführungsbeispiel ermöglicht die Kommunikationsverbindung 9 zwischen den Akkudatenschnittstellen 7, 8 nicht nur die Steuerung der Endgeräte 3, 4, sondern auch die Übertragung von Betriebsprogrammdaten 27, die in Figur 3 gezeigt sind. Diese Betriebsprogrammdaten 27 können zur Aktualisierung der Betriebssoftware bzw. einer Firmware der jeweiligen Akkumulatoren 1, 2 verwendet werden. Der Vorteil dieser Funktion besteht darin, dass beide Akkumulatoren 1, 2 immer auf dem neuesten Softwarestand gehalten werden können, ohne dass eine manuelle Verbindung oder ein separates Update-Verfahren notwendig sind. Des Weiteren kann ein Akku 1, 2, der bereits die aktuelle Betriebssoftware bzw. die aktuelle Firmware besitzt, diese an weitere Akkus 1, 2 weitergeben, die noch eine veraltete Betriebssoftware bzw. Firmware besitzen.

Des Weiteren umfassen die Akkus 1, 2 eine Energiespeichereinheit 10, mittels der elektrische Energie gespeichert und bereitgestellt werden kann. Die Energiespeichereinheit 10 kann gemäß dem vorliegenden Ausführungsbeispiel mehrere Einzelzellen 11 umfassen.

Außerdem können die Akkus 1, 2 eine erste und eine zweite Gehäusehälfte 12, 13 umfassen. Dadurch ist die Energiespeichereinheit 10 vor äußeren Einflüssen geschützt.

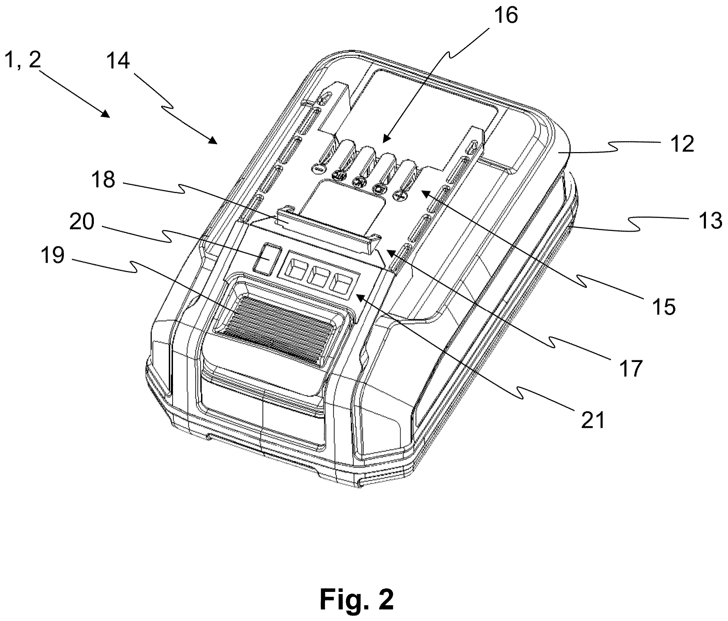

Das in Figur 2 dargestellte Ausführungsbeispiel zeigt einen Akkumulator 1, 2, der als vielseitiger Energiespeicher für verschiedene Arten von Geräten verwendet werden kann. Der Akkumulator 1, 2 kann dabei als Arbeitsgeräteackumulator, Gartengeräteakkumulator und/oder Werkzeuggeräteakkumulator dienen. Insbesondere kann es sich um einen IoT-Arbeitsgeräteakkumulator, IoT-Gartengeräteakkumulator und/oder IoT-Werkzeuggeräteakkumulator handeln.

Ein Arbeitsgeräteakkumulator wird typischerweise für elektrische Handgeräte verwendet, die auf Baustellen, in Werkstätten oder im Heimgebrauch zum Einsatz kommen, wie beispielsweise Bohrmaschinen, Schraubendreher oder Sägen. Diese Akkumulatoren 1, 2 sind darauf ausgelegt, hohe Energieanforderungen zu erfüllen und eine lange Betriebszeit zu gewährleisten, um den effizienten Betrieb solcher Werkzeuge zu ermöglichen.

Ein Gartengeräteakkumulator kommt in Geräten zum Einsatz, die in der Gartenarbeit verwendet werden, wie beispielsweise Rasenmäher, Heckenscheren oder Laubbläser. Hier bietet der Akkumulator 1, 2 den Vorteil, kabellos zu arbeiten, wodurch der Bewegungsradius im Freien nicht durch Kabel eingeschränkt wird.

Ein Werkzeuggeräteakkumulator wird in vielseitigen Werkzeugen verwendet, die sowohl im Handwerk als auch in industriellen Anwendungen zu finden sind, wie z. B. Winkelschleifer, Bohrhämmer oder Schleifmaschinen.

Wenn es sich um einen IoT-Akkumulator handelt, bedeutet dies, dass der Akkumulator 1, 2 mit Internet-of-Things (IoT)-Technologie ausgestattet ist. Dies ermöglicht es, den Akkumulator 1, 2 zu überwachen, zu steuern und/oder in ein (Internet-)Netzwerk einzubinden.

Das in Figur 2 dargestellte Ausführungsbeispiel zeigt einen Akkumulator 1, 2 in einer schematischen perspektivischen Ansicht, wobei die relevanten Bauteile des Gehäuses sowie mechanische und elektrische Verbindungselemente detailliert erkennbar sind.

Der Akkumulator 1, 2 weist ein Gehäuse auf, das zumindest aus einer ersten Gehäusehälfte 12 und einer zweiten Gehäusehälfte 13 ausgebildet ist. Diese Gehäusehälften 12, 13 bilden eine schützende Struktur für die internen Komponenten des Akkumulators 1, 2, insbesondere für die Energiespeichereinheit 10.

An der Oberseite des vorliegenden Ausführungsbeispiels des Akkumulators 1, 2 ist ein Koppelbereich 14 vorgesehen, der als Schnittstelle zur mechanischen und/oder elektrischen Verbindung mit dem Endgerät 3, 4 und/oder einer Ladestation dient. Im Koppelbereich 14 ist ein Kontaktbereich 15 angeordnet, die eine elektrische Verbindung und/oder eine Datenverbindung zum Endgerät 3, 4 ausbildet. Der Kontaktbereich 15 umfasst mehrere Kontaktelemente 16, welche die Übertragung von elektrischem Strom und/oder Daten ermöglichen.

Weiterhin ist in der Figur 2 ein Fixiermechanismus 17 dargestellt, der im Koppelbereich 14 angeordnet ist. Dieser Fixiermechanismus 17 ermöglicht eine sichere mechanische Verbindung des Akkumulators 1, 2 mit einem Endgerät 3, 4 und/oder einer Ladestation, indem der Akkumulator 1, 2 im verbundenen Zustand fixiert wird, sodass ein stabiler Betrieb gewährleistet ist. Der Fixiermechanismus 17 ist dabei vorteilhafterweise lösbar ausgebildet, so dass der Akku 1, 2 vom Ladegerät und vom Endgerät 3, 4 gelöst werden kann. Der Fixiermechanismus 17 umfasst ein Fixierelement 18, mittels dem die lösbare Fixierung zwischen Akku 1, 2 und Endgerät 3, 4 oder Ladegerät ausgebildet werden kann.

Des Weiteren weist der Akkumulator 1, 2 ein Betätigungselement 19 auf, mit dem der Fixiermechanismus 17 gelöst werden kann. Durch Betätigen dieses Betätigungselements 19 kann der Akkumulator 1, 2 wieder vom verbundenen Endgerät 3, 4 oder von der Ladestation getrennt werden. Mit Hilfe des Betätigungselements 19 kann das Fixierelement 18 betätigt bzw. gelöst werden.

Ferner umfasst der Akkumulator 1, 2 eine Anzeigeeinheit 21. Diese Anzeigeeinheit 21 ermöglicht es, den aktuellen Ladezustand und/oder Betriebszustand des Akkumulators 1, 2 anzuzeigen und abzulesen, wie z. B. den Ladezustand oder Fehlermeldungen. Außerdem umfasst der Akku 1, 2 eine Taste 20, mittels der beispielsweise die Anzeigeeinheit 21 zum Anzeigen des Ladezustands aktiviert werden kann.

Das in Figur 3 dargestellte Ausführungsbeispiel zeigt das System 28, das die beiden miteinander kommunizierenden Akkumulatoren 1, 2 umfasst. Das System 28 kann hierbei auch mehrere Akkumulatoren 1, 2 umfassen. Beide Akkumulatoren 1, 2 sind jeweils mit den Endgeräten 3, 4 gekoppelt und weisen gemäß dem vorliegenden Ausführungsbeispiel jeweils eine Erkennungseinheit 23, 24 auf.

Wie aus Figur 3 hervorgeht, umfasst der erste Akkumulator 1 die erste Erkennungseinheit 23 und der zweite Akkumulator 2 die zweite Erkennungseinheit 24. Diese Erkennungseinheiten 23, 24 sind derart ausgebildet, dass sie die Art des an den jeweiligen Akkumulator 1, 2 angeschlossenen Endgeräts 3, 4 erfassen können. Die Erkennung der Art des an den jeweiligen Akkumulator 1, 2 angeschlossenen Endgeräts 3, 4 kann zusätzlich oder alternativ auch durch die entsprechende Steuereinheit 5, 6 erfolgen. Dies ermöglicht dem System 28, automatisch zu erkennen, ob es sich beispielsweise bei dem ersten Endgerät 3 beispielsweise um eine Bohrmaschine und bei dem zweiten Endgerät 4 beispielsweise um einen Staubsauger handelt.

Zusätzlich oder alternativ kann mit Hilfe der Erkennungseinheit 23, 24 auch ein Akkumulatorstatus des Akkus 1, 2 und/oder ein Endgerätestatus des Endgerätes 3, 4 erkannt werden. In Abhängigkeit des Akkumulatorstatus und/oder des Endgerätestatus kann daraufhin die Entscheidung, insbesondere von einer oder mehreren Steuereinheiten 5, 6, getroffen werden, welche Steuereinheit 5, 6 den Master und welche den Slave bildet.

Der Vorteil dieser Erkennungseinheiten 23, 24 liegt darin, dass sie es ermöglichen, nicht nur die Art der Endgeräte 3, 4 zu erkennen, sondern auch den Status des Akkumulators 1, 2 selbst (z. B. Ladezustand, Betriebstemperatur) und/oder den Status des Endgeräts 3, 4 (z. B. aktiv oder inaktiv). Diese Informationen sind entscheidend für die effiziente Steuerung des Systems und die Anpassung der Betriebsmodi. Auf Grundlage dieser Erkennung kann außerdem entschieden werden, welche Steuereinheit 5, 6 den Master und welche den Slave bildet.

Die in den Akkumulatoren 1, 2 integrierten Steuereinheiten 5, 6, wie aus Figur 3 ersichtlich, sind in der Lage, auf Grundlage der von den Erkennungseinheiten 23, 24 gesammelten Daten eine Entscheidung darüber zu treffen, welche Steuereinheit 5, 6 als Master und welche als Slave fungiert. Diese Entscheidung kann auf verschiedenen Faktoren wie dem Status der Akkumulatoren 1, 2, der Betriebszustände der Endgeräte 3, 4 und/oder der Art der angeschlossenen Endgeräte 3, 4 basieren.

Ein Vorteil dieser Master-Slave-Entscheidung bzw. -Rollenverteilung ist die flexible Steuerung der angeschlossenen Geräte. Beispielsweise kann der Ackumulator 1 als Master agieren, wenn die Bohrmaschine 3 gerade aktiv ist, und der Akkumulator 2 als Slave, der den Staubsauger 4 steuert. Diese Rollenzuteilung optimiert die Arbeitsabläufe und stellt sicher, dass die Akkumulatoren 1, 2 und Endgeräte 3, 4 effizient zusammenarbeiten.

Sobald die Entscheidung über Master und Slave getroffen wurde, kann die Master-Steuereinheit 5 Betriebsbefehle an die Slave-Steuereinheit 6 übermitteln. Diese Betriebsbefehle steuern den Betrieb des Slave-Akkumulators 2 und/oder des daran angeschlossenen Slave-Endgeräts 4. Dies ermöglicht eine zentrale Steuerung des gesamten Systems 28, bei der die Master-Steuereinheit 5 nicht nur den Akkumulator 1 und/oder das Endgerät 3 verwaltet, sondern auch die Steuerung des Slave-Akkumulators 2 und/oder des Endgeräts 4 übernimmt.

Ein wichtiger Vorteil dieser Funktion ist die automatische Synchronisation der beiden Endgeräte 3, 4. Beispielsweise kann die Master-Steuereinheit 5 den Staubsauger einschalten, sobald die Bohrmaschine gestartet wird, was zu einer automatisierten und effizienten Arbeitsweise führt.

Gemäß dem Ausführungsbeispiel der Figur 3 kann die Slave-Steuereinheit 6 Statusinformationen über den zweiten Akkumulator 2 und/oder das zweite Endgerät 4 an die Master-Steuereinheit 5 übermitteln. Diese Statusinformationen ermöglichen es der Master-Steuereinheit 5, die Betriebsbedingungen des gesamten Systems 28 zu überwachen und/oder bei Bedarf Anpassungen vorzunehmen.

Der Vorteil dieser Statusübermittlung liegt in der verbesserten Betriebssicherheit des Systems 28. Die kontinuierliche Überwachung des Akkuzustands und der Betriebsmodi der Endgeräte 3, 4 minimiert das Risiko von Ausfällen und/oder sorgt für eine gleichmäßige und effiziente Leistung beider Akkumulatoren 1, 2.

Des Weiteren ist in dieser Figur 3 dargestellt, dass Betriebsprogrammdaten 27 zwischen den Akkus 1, 2 ausgetauscht werden können. Beispielsweise kann dadurch eine Betriebssoftware oder eine Firmware ausgetauscht werden, so dass die Betriebssoftware bzw. die Firmware stets aktuell ist und so, dass alle Akkus 1, 2 die gleiche Software- bzw. Firmwareversion aufweisen. Dadurch kann die aktuelle Firmware im System 28 der mehreren Akkus 1, 2 verteilt werden.

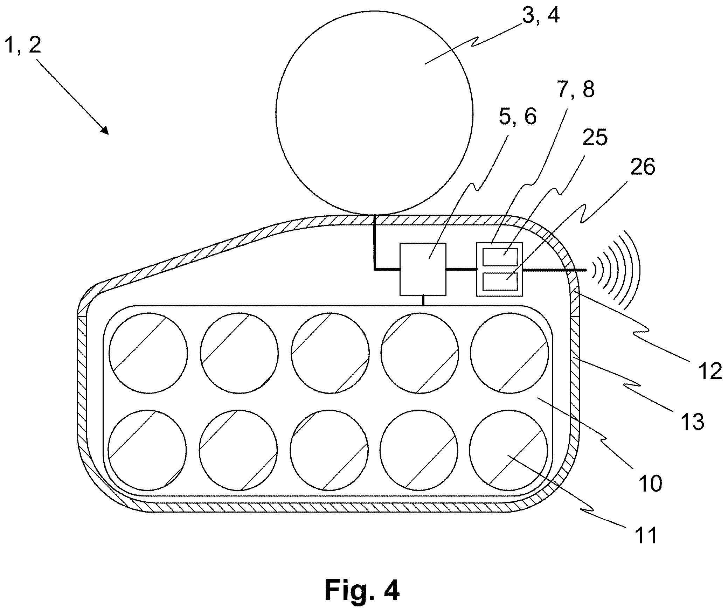

Das in Figur 4 dargestellte Ausführungsbeispiel zeigt lediglich einen Akkumulator 1, 2, deren Akkudatenschnittstelle 7, 8 eine Fernfunkschnittstelle 25 und/oder eine Nahfunkschnittstelle 26 aufweist. Mit Hilfe der Akkudatenschnittstelle 7, 8 bzw. der Fernfunkschnittstelle 25 und/oder der Nahfunkschnittstelle 26 kann die drahtlose Kommunikation ausgebildet werden.

Die in Figur 4 gezeigte Fernfunkschnittstelle 25 der Akkudatenschnittstelle 7, 8 ermöglicht die drahtlose, bidirektionale Kommunikation über große Entfernungen. Diese Fernschnittstelle 25 kann beispielsweise als Sigfox, LoRaWAN, 5G, 4G, LTE-CAT M oder eine andere Mobilfunk- oder Satellitenverbindung ausgeführt sein. Der Vorteil der Fernfunkschnittstelle 25 liegt in der Möglichkeit, den Akkumulator 1, 2 auch über weite Distanzen hinweg zu überwachen und/oder zu steuern, was beispielsweise in verteilten IoT-Anwendungen (Internet of Things) von Nutzen ist.

Zusätzlich zur Fernfunkschnittstelle 25 umfasst die Akkudatenschnittstelle 7, 8 gemäß dem vorliegenden Ausführungsbeispiel eine Nahfunkschnittstelle 26. Diese Nahfunkschnittstelle 26 ermöglicht eine kurzreichweitige drahtlose, bidirektionale Kommunikation und kann beispielsweise als Bluetooth, Wi-Fi, Zigbee, NFC oder eine ähnliche Technologie ausgeführt sein. Der Vorteil der Nahfunkschnittstelle 26 besteht darin, dass sie eine schnelle und energieeffiziente Kommunikation im Nahbereich ermöglicht, etwa zur Verbindung mit einem Mobilgerät und/oder einem nahegelegenen anderen Akkumulator 1, 2. Beispielsweise könnte der Akkumulator 1, 2 über Bluetooth Low Energy (BLE) mit einem Smartphone verbunden werden, um den Ladestatus oder andere Betriebsinformationen abzurufen.

Des Weiteren ist die Steuereinheit 5, 6 mit Hilfe insbesondere der Nahfunkschnittstelle 26 in der Lage, nach anderen Akkumulatoren 1, 2 im näheren Umkreis zu suchen und/oder ein Beacon-Signal auszusenden. Dieses Beacon-Signal dient dazu, andere Akkumulatoren 1, 2 im Umkreis zu finden und zu identifizieren, was für eine automatische Erkennung von anderen Akkumulatoren 1, 2 und den Aufbau von Kommunikationsverbindungen 9 nützlich ist.

### Bezugszeichenliste

- 1: erster Akkumulator / Master-Akkumulator
- 2: zweiter Akkumulator / Slave-Akkumulator
- 3: erstes Endgerät / Master-Endgerät
- 4: zweites Endgerät / Slave-Endgerät
- 5: erste Steuereinheit / Master-Steuereinheit
- 6: zweite Steuereinheit / Slave-Steuereinheit
- 7: erste Akkudatenschnittstelle
- 8: zweite Akkudatenschnittstelle
- 9: Kommunikationsverbindung
- 10: Energiespeichereinheit
- 11: Einzelzellen
- 12: erste Gehäusehälfte
- 13: zweite Gehäusehälfte
- 14: Koppelbereich
- 15: Kontaktbereich
- 16: Kontaktelemente
- 17: Fixiermechanismus
- 18: Fixierelement
- 19: Betätigungselement
- 20: Taste
- 21: Anzeigeeinheit
- 23: erste Erkennungseinheit
- 24: zweite Erkennungseinheit
- 25: Fernfunkschnittstelle
- 26: Nahfunkschnittstelle
- 27: Betriebsprogrammdaten
- 28: System

## Patentansprüche

1. Akkumulator (1, 2), vorzugsweise Arbeitsgeräteakkumulator, Gartengeräteakkumulator und/oder Werkzeuggeräteakkumulator, insbesondere IoT-Arbeitsgeräteakkumulator, IoT-Gartengeräteakkumulator und/oder IoT-Werkzeuggeräteakkumulator,
mit zumindest einer Energiespeichereinheit (10) und
mit zumindest einer Steuereinheit (5, 6) zum Steuern und/oder Überwachen des Akkumulators (1, 2) und/oder eines mit dem Akkumulator (1, 2) gekoppelten Endgeräts (3, 4),
**dadurch gekennzeichnet,**
**dass** der Akkumulator (1, 2) zumindest eine, insbesondere bidirektionale, Akkudatenschnittstelle (7, 8) umfasst und
**dass** die Steuereinheit (5, 6) derart ausgebildet und/oder eingerichtet ist, dass diese über die Akkudatenschnittstelle (7, 8) mit zumindest einer weiteren Steuereinheit (5, 6) zumindest eines weiteren Akkumulators (1, 2), insbesondere bidirektional, kommunizieren kann.

2. Akkumulator nach dem vorherigen Anspruch, **dadurch gekennzeichnet, dass** die Steuereinheit (5, 6) derart ausgebildet und/oder eingerichtet ist, dass diese eine, insbesondere bidirektionale, Kommunikationsverbindung (9) zur zumindest einen weiteren Steuereinheit (5, 6) des zumindest einen weiteren Akkumulators (1, 2) ausbilden kann, und/oder
dass die Steuereinheit (5, 6) derart ausgebildet und/oder eingerichtet ist, dass diese nach einem weiteren Akkumulator (1, 2) suchen kann und/oder dass diese ein Beacon-Signal zum Auffinden durch einen weiteren Akkumulator (1, 2) aussenden kann.

3. Akkumulator nach einem oder mehreren der vorherigen Ansprüche, **dadurch gekennzeichnet, dass** die Steuereinheit (5, 6) derart ausgebildet und/oder eingerichtet ist, dass diese als eine Master-Steuereinheit (5) und/oder als Slave-Steuereinheit (6) betrieben werden kann und/oder
dass die Steuereinheit (5, 6) derart ausgebildet und/oder eingerichtet ist, dass diese mit der zumindest einen weiteren Steuereinheit (5, 6) des zumindest einen weiteren Akkumulators (1, 2) eine Entscheidung treffen kann, welche der zumindest zwei Steuereinheiten (5, 6) einen Master und welche der zumindest einen weiteren Steuereinheit (5, 6) einen Slave bildet, und/oder
dass in Abhängigkeit der Entscheidung die zumindest eine Steuereinheit (5, 6) als Master oder als Slave betrieben werden kann.

4. Akkumulator nach einem oder mehreren der vorherigen Ansprüche, **dadurch gekennzeichnet, dass** der Akkumulator (1, 2) zumindest eine Erkennungseinheit (23, 24) umfasst, mittels der zumindest die Art des an den Akkumulator (1, 2) angekoppelten Endgeräts, ein Akkumulatorstatus des Akkumulators (1, 2) und/oder ein Endgerätestatus des Endgeräts (3, 4) erkannt werden kann und/oder
dass die Steuereinheit (5, 6) derart ausgebildet und/oder eingerichtet ist, dass diese in Abhängigkeit der Art des an den Akkumulator (1, 2) angekoppelten Endgeräts (3, 4), des Akkumulatorstatus und/oder des Endgerätestatus mit der zumindest einen weiteren Steuereinheit (5, 6) die Entscheidung über den Master und den zumindest einen Slave treffen kann.

5. Akkumulator nach einem oder mehreren der vorherigen Ansprüche, **dadurch gekennzeichnet, dass** nach der Entscheidung über den Master und Slave die Master-Steuereinheit (5, 6) Betriebsbefehle an die Slave-Steuereinheit (5, 6) übermitteln kann, mit denen die Slave-Steuereinheit (5, 6) ihren entsprechenden Akkumulator (1, 2) und/oder das an ihren Akkumulator (1, 2) angekoppelte Endgerät (3, 4) steuern und/oder überwachen kann.

6. Akkumulator nach einem oder mehreren der vorherigen Ansprüche, **dadurch gekennzeichnet, dass** die Slave-Steuereinheit (5, 6) Statusinformationen über ihren Akkumulator (1, 2) und/oder über das an ihren Akkumulator (1, 2) angekoppelte Endgerät (5, 6) an die Master-Steuereinheit (5, 6) übermitteln kann.

7. Akkumulator nach einem oder mehreren der vorherigen Ansprüche, **dadurch gekennzeichnet, dass** die Steuereinheit (5, 6) mittels der Ackudatenschnittstelle (7, 8) eine Identifizierung aussenden kann und/oder
dass mittels der Akkudatenschnittstelle (7, 8) eine Identifizierung eines weiteren Akkumulators (1, 2) empfangen und die Steuereinheit (5, 6) diese auswerten kann, um den weiteren Akkumulator (1, 2) zu identifizieren.

8. Akkumulator nach einem oder mehreren der vorherigen Ansprüche, **dadurch gekennzeichnet, dass** die Steuereinheit (5, 6) mittels der Ackudatenschnittstelle (7, 8) Betriebsprogrammdaten an den weiteren Akkumulator (1, 2) senden und/oder von dem weiteren Akkumulator (1, 2) empfangen kann.

9. Akkumulator nach einem oder mehreren der vorherigen Ansprüche, **dadurch gekennzeichnet, dass** die Akkudatenschnittstelle (7, 8) eine Fernfunkschnittstelle (25) umfasst, die vorzugsweise als Sigfox, LoRaWAN, 5G, 4G, 3G, 2G, LTE-CAT M, eine Satellitenkommunikation, WiMAX, LTE-M, DASH7, Wi-Fi, HAPS Mobilfunkstandart, NB-IoT, und/oder als eine Satellitenverbindung ausgebildet ist und/oder dass die Akkudatenschnittstelle (7, 8) eine Nahfunkschnittstelle (26) umfasst, die vorzugsweise als Bluetooth, Wi-Fi, Zigbee, NFC, Z-Wave, Infrarot, Thread, Ultra-Wideband, Bluetooth Low Energy, ANT+, Wi-Fi Direct und/oder RFID ausgebildet ist.

10. System (28)
mit zumindest zwei Akkumulatoren (1, 2),
**dadurch gekennzeichnet,**
**dass** die zumindest zwei Akkumulatoren (1, 2) gemäß einem oder mehreren der vorherigen Ansprüche ausgebildet sind.

11. Verfahren zum Betreiben eines Systems (28) mit zumindest zwei Ackumulatoren (1, 2), wobei das System (28) und/oder die zumindest zwei Akkumulatoren (1, 2) gemäß einem oder mehreren der vorherigen Ansprüche ausgebildet ist,
**dadurch gekennzeichnet,**
**dass** eine erste Steuereinheit (5) eines ersten Akkumulators (1) über dessen erste Akkudatenschnittstelle (7) mit zumindest einer zweiten Steuereinheit (6) eines zweiten Akkumulators (2) über dessen zweite Akkudatenschnittstelle (8), insbesondere bidirektional, kommuniziert.

12. Verfahren nach einem oder mehreren der vorherigen Ansprüche,
**dadurch gekennzeichnet, dass** die Akkumulatoren (1, 2) nach einem anderen Akkumulator (1, 2), insbesondere im näheren Umkreis, suchen und/oder
dass die Akkumulatoren (1, 2) ein Beacon-Signal aussenden.

13. Verfahren nach einem oder mehreren der vorherigen Ansprüche,
**dadurch gekennzeichnet, dass** die zumindest zwei Steuereinheiten (5, 6) entscheiden, welche der zumindest zwei Steuereinheiten (5, 6) einen Master und welche den zumindest einen Slave bilden und/oder dass die zumindest zwei Steuereinheiten (5, 6) in Abhängigkeit der Art des an die Akkumulatoren (1, 2) angekoppelten Endgeräte (3, 4), des Akkumulatorstatus und/oder des Endgerätestatus entscheiden, welche Steuereinheit (5, 6) der Master und welche der zumindest eine Slave ist und/oder
dass sich die zumindest zwei Akkumulatoren (1, 2), insbesondere vor der Entscheidung über den Master und den Slave, vorher identifizieren, wobei dafür vorzugsweise eine Identifizierung übermittelt wird.

14. Verfahren nach einem oder mehreren der vorherigen Ansprüche, **dadurch gekennzeichnet, dass** nachdem die Entscheidung über den Master und Slave getroffen ist, die Master-Steuereinheit (5, 6) Betriebsbefehle an die Slave-Steuereinheit (5, 6) übermittelt, mit denen die Slave-Steuereinheit (5, 6) ihren entsprechenden Akkumulator (1, 2) und/oder das an ihren Akkumulator (1, 2) angekoppelte Endgerät (3, 4) steuert und/oder überwacht und/oder dass die Slave-Steuereinheit (5, 6) Statusinformationen über ihren Ackumulator (1, 2) und/oder über das an ihren Akkumulator (1, 2) angekoppelte Endgerät (5, 6) an die Master-Steuereinheit (5, 6) übermittelt.

15. Verfahren nach einem oder mehreren der vorherigen Ansprüche, **dadurch gekennzeichnet, dass** Betriebsprogrammdaten (27) zum Aktualisieren einer Betriebssoftware von einem Akkumulator (1, 2) mittels der Akkudatenschnittstelle (7, 8) auf den anderen Akkumulator (1, 2) übertragen wird, wobei die Betriebsprogrammdaten (27) vorher vom entsprechenden Akkumulator (1, 2) vorzugsweise angefordert wird.
